(19) Europäisches Patentamt
European Patent Office
Office européen des brevets

(11)  EP 2 660 283 B1

(12)  EUROPEAN PATENT SPECIFICATION

(45) Date of publication and mention
of the grant of the patent:
**06.04.2016  Bulletin 2016/14**

(21) Application number: **11853764.6**

(22) Date of filing: **28.12.2011**

(51) Int Cl.:
*C08J 9/32* (2006.01)          *C08L 63/00* (2006.01)
*C08G 59/40* (2006.01)

(86) International application number:
**PCT/JP2011/080414**

(87) International publication number:
**WO 2012/091098 (05.07.2012 Gazette 2012/27)**

(54) **RESIN COMPOSITION FOR EXPANSION MOLDING**

HARZZUSAMMENSETZUNG ZUM EXPANSIONSFORMEN

COMPOSITION DE RÉSINE POUR MOULAGE PAR EXPANSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010  JP 2010293068**

(43) Date of publication of application:
**06.11.2013  Bulletin 2013/45**

(73) Proprietor: **Sekisui Chemical Co., Ltd.
Osaka-shi, Osaka 530-0047 (JP)**

(72) Inventors:
 • **YAMAUCHI, Hiroshi**
   **Mishima-gun**
   **Osaka 618-0021 (JP)**
 • **MORITA, Hiroyuki**
   **Mishima-gun**
   **Osaka 618-0021 (JP)**
 • **NATSUI, Hiroshi**
   **Mishima-gun**
   **Osaka 618-0021 (JP)**

(74) Representative: **Hart-Davis, Jason et al
Cabinet Beau de Loménie
158, rue de l'Université
75340 Paris Cedex 07 (FR)**

(56) References cited:
 **WO-A1-03/099955      JP-A- 2003 128 830
 JP-A- 2003 133 343      JP-A- 2005 029 607
 JP-A- 2005 343 967      JP-A- 2009 203 451**

 • **DATABASE WPI Week 200515 Thomson
   Scientific, London, GB; AN 2005-135817
   XP002723275, -& JP 2005 029607 A (SANYO
   CHEM IND LTD) 3 February 2005 (2005-02-03)**
 • **DATABASE WPI Week 200377 Thomson
   Scientific, London, GB; AN 2003-817853
   XP002723276, -& JP 2003 128830 A (SEKISUI
   CHEM IND CO LTD) 8 May 2003 (2003-05-08)**

**Description**

TECHNICAL FIELD

The present invention relates to a resin composition for foam molding which can achieve high expansion ratio and can significantly improve tactile impression and vibration damping properties of the foaming mold to be obtained.

BACKGROUND ART

Thermally expandable microcapsules have been used for various applications such as design-imparting agents and weight-reducing agents. They have been also used for paint such as foaming ink and wallpaper to achieve weight reduction.

A widely known thermally expandable microcapsule is one which includes a thermoplastic shell polymer filled with a volatile expansion agent which turns into gas at a temperature not higher than the softening point of the shell polymer. For example, Patent Literature 1 discloses a method for producing a thermally expandable microcapsule filled with a volatile expansion agent, including steps of: preparing an oily mixture by mixing a volatile expansion agent such as an aliphatic hydrocarbon having a low boiling point and a monomer; and adding the oily mixture and an oil-soluble polymerization catalyst to an aqueous dispersion medium containing a dispersant with stirring to perform suspension polymerization.

The thermally expandable microcapsule obtained by the method can be thermally expanded by gasification of the volatile expansion agent at relatively low temperatures of about 80°C to 130°C. When the microcapsule is heated at high temperatures or heated for a long time, however, gas escapes from the expanded microcapsule, leading to reduction in the expansion ratio. Also, due to insufficient thermal resistance and strength of the thermally expandable microcapsule, so-called "deflation" may occur to collapse the microcapsule at high temperatures.

Patent Literature 2 discloses a thermally expandable microcapsule in which a polymer obtainable by polymerizing a carboxy group-containing monomer and a monomer having a group reactable with a carboxy group is used as a shell. The patent literature reports that such a thermally expandable microcapsule has an increased three-dimensional cross-linking density, and thereby is extremely resistant to contraction even after the shell is expanded to be very thin. The patent literature also reports that such a thermally expandable microcapsule has significantly improved heat resistance.

However, even a foaming mold produced using such a thermally expandable microcapsule may not have a desired expansion ratio (specific gravity) . The foaming mold may also have distortion and poor appearance. Even if a desired expansion ratio is achieved, the thermally expandable microcapsule may foam on the surface of the foaming mold. Also, problems such as a surface coarseness and poor appearance occur. Therefore, the thermally expandable microcapsule disclosed in Patent Literature 2 may not provide a satisfying foaming mold.

CITATION LIST

Patent Literature

  Patent Literature 1: Japanese Kokoku Publication No. Sho-42-26524
  Patent Literature 2: WO 99/43758

According to JP 2005-029607, a thermally expansible microcapsule (C) has, as an outer shell, a polymer (A) which is at least one resin selected from the group consisting of a polyurethane resin, a polyester resin, a polyamide resin, and an epoxy resin and has a glass transition temperature of -40°C to 70°C, and includes a solvent (B) which does not dissolve the polymer (A) and has a boiling point of 50°C to 150°C.

SUMMARY OF INVENTION

Technical Problem

The present invention aims to provide a resin composition for foam molding which can achieve high expansion ratio and can significantly improve tactile impression and vibration damping properties of the foaming product to be obtained.

Solution to Problem

The present invention is defined in the claims and described in detail below.

The present inventors have found that high expansion ratio and significantly improved tactile impression and vibration damping properties are achieved by a resin composition for foam molding containing a thermally expandable microcapsule that includes a shell containing an epoxy resin, a thermoplastic resin, and a curable compound containing two or more functional groups each selected from the group consisting of a carboxy group, a hydroxy group, an amino group, an amido group, and an acid anhydride group. Thereby, the present inventors have completed the present invention.

The resin composition for foam molding of the present invention contains a thermally expandable microcapsule that includes a shell containing epoxy resin and a core agent that is a volatile expansion agent encapsulated by the shell.

The thermally expandable microcapsule has a structure in which a core agent that is a volatile expansion agent is encapsulated by a shell containing a polymer. Because of such a structure, for example, when a foaming mold is molded by adding the thermally expandable microcapsule to a thermoplastic resin, heating during the molding causes gasification of the core agent, while causing softening and expansion of the shell. Thereby, a foaming mold and the like can be produced.

A monomer composition for the polymer preferably contains a nitrile-type monomer. The monomer composition containing a nitrile-type monomer allows the thermally expandable microcapsule to be obtained to have high heat resistance and a high gas barrier performance.

The nitrile-type monomer is not particularly limited, and examples thereof include acrylonitrile, methacrylonitrile, a-chloroacrylonitrile, α-ethoxyacrylonitrile, fumaronitrile, and mixtures thereof. Especially preferred among these are acrylonitrile and methacrylonitrile. Each of them may be used alone, or two or more of them may be used in combination.

The monomer composition may contain other monomers copolymerizable with the nitrile-type monomer (hereinafter, also referred to as "other monomers") other than the nitrile-type monomer.

Other monomers are not particularly limited, and appropriately selected according to the properties required for the thermally expandable microcapsule to be obtained. Examples thereof include divinylbenzene, ethylene glycol di(meth)acrylate, diethylene glycol di(meth)acrylate, triethylene glycol di(meth)acrylate, propylen glycol di(meth)acrylate, 1,4-butanediol di(meth)acrylate, 1,6-hexanediol di(meth)acrylate, 1,9-nonanediol di(meth)acrylate, polyethyleneglycol di(meth)acrylate having a molecular weight of 200 to 600, glycerin di(meth)acrylate, trimethylolpropane di(meth)acrylate, trimethylolpropane tri(meth)acrylate, ethylene oxide-modified trimethylolpropane tri(meth)acrylate, pentaerythritol tri(meth)acrylate, triallylformal tri(meth)acrylate, pentaerythritol tetra(meth)acrylate, dipentaerythritol hexa(meth)acrylate, and dimethylol-trycyclodecane di(meth)acrylate. Examples of other monomers also include: acrylic acid esters such as methyl acrylate, ethyl acrylate, butyl acrylate and dicyclopentenyl acrylate; methacrylic acid esters such as methyl methacrylate, ethyl methacrylate, butyl methacrylate, and isobornyl methacrylate; and vinyl monomers such as vinyl chloride, vinylidene chloride, vinyl acetate, and styrene. Each of them may be used alone, or two or more of them may be used in combination.

In the case that the monomer composition contains other monomers, the amount of other monomers in the monomer composition is not particularly limited. The upper limit of the amount of other monomers is preferably 40 parts by weight for 100 parts by weight of the nitrile-type monomer. If the amount of other monomers is more than 40 parts by weight, the amount of the nitrile-type monomer content is lowered, and thereby the thermally expandable microcapsule to be obtained has reduced heat resistance and a reduced gas barrier performance. Such a thermally expandable microcapsule is likely to break or contract at high temperatures, and may not expand at high expansion ratio.

The monomer composition may further contain a monomer having one carboxy group in each molecule.

Examples of the monomer having one carboxy group in each molecule include unsaturated monocarboxylic acid such as acrylic acid, methacrylic acid, ethacrylic acid, crotonic acid, and cinnamic acid. Preferred among these are acrylic acid and methacrylic acid.

In the case that the monomer composition contains a monomer having one carboxy group in each molecule, the amount of the monomer having one carboxy group in each molecule is not particularly limited. The preferable lower limit is 5 parts by weight, and the preferable upper limit is 100 parts by weight, for 100 parts by weight of the nitrile-type monomer.

A metal cation salt may be added to the monomer composition.

In the case that a metal cation salt is added, for example, a carboxy group in the monomer having one carboxy group in each molecule is ionically cross-linked with the metal cation, leading to increase in cross-linking efficiency of the shell and improvement of heat resistance of the thermally expandable microcapsule to be obtained. Thereby, the thermally expandable microcapsule is less likely to break or contract, and can expand at high expansion ratio even at high temperatures. Further, even at high temperatures, the ionic cross-linking prevents easy reduction in the modulus of elasticity of the shell of the thermally expandable microcapsule to be obtained. Therefore, such a thermally expandable microcapsule is less likely to break or contract and can expand at high expansion ratio even when, after mixed with a matrix resin, molded by a method applying high shear force such as kneading molding, calendar molding, extrusion molding, and injection molding.

The metal cation of the metal cation salt is not particularly limited as long as it is a metal cation ionically crosslinkable with a carboxy group of the monomer having one carboxy group in each molecule such as methacrylic acid. Examples thereof include Na, K, Li, Zn, Mg, Ca, Ba, Sr, Mn, Al, Ti, Ru, Fe, Ni, Cu, Cs, Sn, Cr, and Pb ions. Preferred among these are Ca, Zn, and Al ions, which are divalent to trivalent metal cations. Zn ion is especially preferable.

The metal cationic salt is preferably a hydroxide of the metal cation. Each of them may be used alone, or two or more of them may be used in combination.

In the case that two or more of the metal cation salts are used in combination, for example, a combination of a salt containing an alkali metal ion or an alkali earth metal ion and a salt containing a metal cation other than the alkali metal ion or the alkali earth metal ion is preferred. The alkali metal ion and the alkali earth metal ion can activate functional groups such as a carboxy group, and can accelerate ionic cross-linking between the functional group such as a carboxy group and a metal cation other than the alkali metal ion or the alkali earth metal ion.

The alkali metal or alkali earth metal is not particularly limited, and examples thereof include Na, K, Li, Ca, Ba, and Sr. Preferred among these are Na and K, which have strong basicity.

The amount of the metal cation salt in the monomer composition is not particularly limited. The preferable lower limit is 0.1 parts by weight, and the preferable upper limit is 10 parts by weight, for 100 parts by weight of the nitrile-type monomer. If the amount of the metal cation salt is less than 0.1 parts by weight, the enhancing effect for heat resistance of the thermally expandable microcapsule to be obtained may be insufficient. If the amount of the metal cation salt is more than 10 parts by weight, the thermally expandable microcapsule to be obtained may not expand at high expansion ratio.

A polymerization initiator is preferably added to the monomer composition.

The polymerization initiator is not particularly limited, and examples thereof include dialkyl peroxides, diacyl peroxides, peroxyesters, peroxy dicarbonates, and azo compounds.

The dialkyl peroxide is not particularly limited, and examples thereof include methyl ethyl peroxide, di-t-butyl peroxide, dicumyl peroxide, and isobutyl peroxide.

The diacyl peroxide is not particularly limited, and examples thereof include benzoyl peroxide, 2,4-dichlorobenzoyl peroxide, and 3,5,5-trimethyl hexanoyl peroxide.

The peroxyester is not particularly limited, and examples thereof include t-butyl peroxy pivalate, t-hexyl-peroxy pivalate, t-butyl peroxy neodecanoate, t-hexyl peroxy neodecanoate, 1-cyclohexyl-1-methyl ethyl peroxy neodecanoate, 1,1,3,3-tetramethylbutyl peroxy neodecanoate, cumyl peroxy neodecanoate, and ($\alpha,\alpha$-bis-neodecanoyl peroxy) diisopropyl benzene.

The peroxy dicarbonate is not particularly limited, and examples thereof include bis(4-t-butylcyclohexyl)peroxy dicarbonate, di-n-propyl-peroxy dicarbonate, diisopropyl peroxy dicarbonate, di(2-ethylethyl peroxy) dicarbonate, dimethoxybutyl peroxy dicarbonate, and di(3-methyl-3-methoxybutyl peroxy) dicarbonate.

The azo compound is not particularly limited, and examples thereof include 2,2'-azobisisobutyronitrile, 2,2'-azobis(4-methoxy-2,4-dimethylvaleronitrile), 2,2'-azobis(2,4-dimethylvaleronitrile), and 1,1'-azobis(1-cyclohexanecarbonitrile).

The monomer composition further optionally contains a stabilizer, an ultraviolet absorber, an antioxidant, an antistatic agent, a flame retardant, a silane coupling agent, a coloring material, and the like.

The weight average molecular weight of the polymer to be obtained by polymerizing the monomer composition is not particularly limited. The preferable lower limit is 100,000, and the preferable upper limit is 2,000,000. If the weight average molecular weight is less than 100, 000, strength of the shell of the thermally expandable microcapsule to be obtained is reduced. A thermally expandable microcapsule with such a shell is more likely to break or contract, and may not expand at high expansion ratio, at high temperatures. If the weight average molecular weight is more than 2,000,000, strength of the shell is too high, and the thermally expandable microcapsule to be obtained may have a reduced expansion performance.

The shell of the thermally expandable microcapsule contains an epoxy resin.

In the present invention, the epoxy resin reacts with the curable compound to be cured during expansion of the thermally expandable microcapsule by heating. Thereby, the swelling is not inhibited during expansion, and the expansion ratio can be improved.

The epoxy resin is not particularly limited, and examples thereof include a bisphenol A-type epoxy resin, a bisphenol F-type epoxy resin, a phenolic novolac-type epoxy resin, a cresol novolac-type epoxy resin, a dicyclopentadiene-type epoxy resin, a glycidyl amine-type epoxy resin, glycidyl mehtacrylate, allyl glycidyl ether, and N,N-bis(2,3-epoxypropyl)-4-(2,3-epoxypropoxy)aniline.

The number of the functional groups of the epoxy resin (number of the epoxy groups) is not particularly limited, and is preferably 1 to 6, and more preferably 2 to 4. In the case that the number of the functional groups is 2 or larger, strength of the cured shell of the thermally expandable microcapsule is more enhanced, and foam breaking is less likely to occur. Thereby, a molded product with higher expansion ratio can be obtained.

The epoxy resin preferably has a curing temperature of 120°C or higher.

In the case that the epoxy resin has a curing temperature of 120°C or higher, the shell of the thermally expandable microcapsule is not cured while the monomer composition containing a nitrile-type monomer polymerizes. Therefore, expansion of the thermally expandable microcapsule by heating is not inhibited, and expansion ratio can be improved.

Here, the curing temperature may be derived from the gelation temperature of a mixture containing the epoxy resin and citric acid, which is measured while heating the mixture.

The epoxy resin preferably has a gel fraction at T 1.0 of lower than 5%, and a gel fraction at T 1.5 of not lower than 5%, where T 1.0 is defined as a temperature at which the vapor pressure of the core agent reaches 1.0 MPa, and T 1.5 is defined as a temperature at which the vapor pressure of the core agent reaches 1.5 MPa.

Here, the vapor pressure of the core agent may be calculated using Antoine equation.

The gel fraction of the epoxy resin may be calculated as a ratio of the dry weight of a swollen product of the epoxy resin obtained by swelling the epoxy resin by a gelling agent to the total weight of the epoxy resin and the gelling agent [the dry weight of the swollen product / (the weight of epoxy resin + the weight of gelling agent)(w/w)].

Here, the gelling agent is selected from the predetermined ones according to the type of the epoxy resin.

The T 1.0 is estimated to be close to a temperature at which the thermally expandable microcapsule starts expanding.

Accordingly, in the case that the gel fraction at T 1.0 of the epoxy resin is not lower than 5%, the epoxy resin becomes too hard before the expansion starts, and thereby the expansion of the thermally expandable microcapsule may be inhbited. This may lead to reduction in Dmax (maximum expansion displacement) of the expanded particle. Also, the foaming mold to be obtained has a reduced expansion ratio.

At T 1.5, increased internal pressure due to the core agent may cause break or outgassing of the thermally expandable microcapsule.

Accordingly, in the case that the gel fraction at T 1.5 of the epoxy resin is less than 5%, the epoxy resin is not hardened enough at that temperature, possibly resulting in break or deflation of the shell. Also, $\Delta T$ (durability) of the expanded thermally expandable microcapsule may be reduced. Further, the foam break is more likely to occur in the foaming mold.

Examples of the combination of the epoxy resin and the core agent meeting the conditions that the epoxy resin has a gel fraction at T 1.0 of lower than 5% and has a gel fraction at T 1.5 of 5% or higher include: a combination of Epikote 828 US (product of Japan Epoxy Resin Co., Ltd.) as the epoxy resin and a mixture of isopentane (30% by weight) and isooctane (70% by weight) as the core agent; and a combination of jER-630 (product of Japan Epoxy Resin Co., Ltd.) as the epoxy resin and a mixture of isopentane (70% by weight) and isooctane (30% by weight) as the core agent.

The preferable lower limit of the amount of the epoxy resin in the shell is 0.01% by weight, and the preferable upper limit is 30% by weight, for the total of the polymer that forms the shell.

If the amount of the epoxy resin is less than 0.01% by weight, thermosetting properties may not be exhibited during expansion by heating. If the amount of the epoxy resin is more than 30% by weight, the gas barrier performance of the shell is reduced, and expansion may be inhibited.

The thermally expandable microcapsule includes a core agent that is a volatile expansion agent.

In the present description, the volatile expansion agent denotes a substance that turns into gas at a temperature lower than the softening point of the shell.

Examples of the volatile expansion agent include low molecular-weight hydrocarbons such as ethane, ethylene, propane, propene, n-butane, isobutane, butene, isobutene, n-pentane, isopentane, neopentane, n-hexane, heptane, and petroleum ether; chlorofluorocarbons such as $CCl_3F$, $CCl_2F_2$, $CClF_3$, and $CClF_2$-$CClF_2$; and tetraalkylsilanes such as tetramethylsilane, trimethylethylsilane, trimethylisopropylsilane, and trimethyl-n-propylsilane. Preferred among these are isobutane, n-butane, n-pentane, isopentane, n-hexane, petroleum ether, and mixtures thereof. Each of these volatile expansion agents may be used alone, or two or more of them may be used in combination.

The low-boiling-point hydrocarbons having ten or less carbon atoms are preferable for the thermally expandable microcapsule, among these volatile expansion agents. Such a hydrocarbon enables the thermally expandable microcapsule to have a high expansion ratio and to start expanding promptly.

The volatile expansion agent may be a thermally decomposable compound, which is decomposed by heating to turn into gas.

In the thermally expandable microcapsule, the preferable lower limit of the amount of the volatile expansion agent used as a core agent is 10% by weight, and the preferable upper limit thereof is 25% by weight.

The thickness of the shell depends on the amount of the core agent. If the shell becomes too thick due to reduction in the amount of the core agent, the foaming performance is deteriorated. In the case that the amount of the core agent is increased, the strength of the shell is decreased. An amount of 10% to 25% by weight of the core agent allows prevention of deflation of the thermally expandable microcapsule and improvement of foaming performance simultaneously.

The maximum foaming temperature (Tmax) of the thermally expandable microcapsule is not particularly limited, and the preferable lower limit thereof is 200°C. A thermally expandable microcapsule having a maximum foaming temperature of lower than 200°C has reduced heat resistance, tends to break or contract at high temperatures, and may not expand at high expansion ratio. Also, for example, if such a thermally expandable microcapsule is used in production of a masterbatch pellet, the shearing force applied during production may cause foaming, which may prevent stable production of an unfoamed masterbatch. The more preferable lower limit is 210°C

Here, in the present description, the maximum foaming temperature refers to a temperature at which the diameter of the thermally expandable microcapsule, which is measured while heating the thermally expandable microcapsule from an ordinary temperature, reaches its maximum displacement amount.

The upper limit of the foaming starting temperature (Ts) of the thermally expandable microcapsule is preferably 200°C. If the foaming starting temperature is higher than 200°C, the expansion ratio may not be increased, especially in the case of an injection molding method. The lower limit of the foaming starting temperature is preferably 130°C, and the upper limit of the foaming starting temperature is more preferably 180°C.

The volume average particle size of the thermally expandable microcapsule is not particularly limited. The lower limit thereof is preferably 10 μm, and the upper limit thereof is preferably 50 μm. If the thermally expandable microcapsule has a volume average particle size of smaller than 10 μm, when the resin composition for foam molding is molded by adding a thermally expandable microcapsule to matrix resin, for example, the foaming mold to be obtained has too small air bubbles, which may lead to insufficient reduction in weight. If the thermally expandable microcapsule has a volume average particle size of larger than 50 μm, when the resin composition for foam molding is molded by adding a thermally expandable microcapsule to a matrix resin, for example, the foaming mold to be obtained has too large air bubbles, which may adversely affect the strength and the like. The lower limit is more preferably 15 μm, and the upper limit is more preferably 40 μm.

The method for producing the thermally expandable microcapsule is not particularly limited, and examples thereof include a method including steps of: preparing an aqueous dispersion medium; dispersing an oily mixture containing a monomer composition that contains a nitrile-type monomer, and epoxy resin, and the volatile expansion agent in the aqueous dispersion medium; and polymerizing the monomer composition to provide a thermally expandable microcapsule that includes a shell containing a polymer obtained by polymerizing the monomer composition containing a nitrile-type monomer and an epoxy resin and a core agent that is a volatile expansion agent encapsulated by the shell.

In the step of preparing an aqueous medium, for example, water and a dispersion stabilizer, and an auxiliary stabilizer if necessary, are put in a polymerization vessel to prepare an aqueous dispersion medium containing a dispersion stabilizer. Alkali metal nitrites, tin(II) chloride, tin(IV) chloride, potassium dichromate, and the like may be optionally added to the aqueous dispersion medium.

Examples of the dispersion stabilizer is not particularly limited, and examples thereof include silica, calcium phosphate, magnesium hydroxide, aluminum hydroxide, iron (III) hydroxide, barium sulfate, calcium sulfate, sodium sulfate, calcium oxalate, calcium carbonate, calcium carbonate, barium carbonate, and magnesium carbonate.

The auxiliary stabilizer is not particularly limited, and examples thereof include a condensation product of diethanolamine and aliphatic dicarboxylic acid, a condensation product of urea and formaldehyde, water-soluble nitrogen-containing compounds, polyethylene oxide, tetramethyl ammonium hydroxide, gelatin, methyl cellulose, polyvinyl alcohol, dioctyl sulfosuccinate, sorbitan ester, and various emulsifiers.

The water-soluble nitrogen-containing compound is not particularly limited, and examples thereof include polyvinyl pyrolidone, polyethylene imine, polyoxy ethylene alkyl amine, polydialkyl aminoalkyl (meth)acrylates such as polydimethyl amino ethyl methacrylate and polydimethyl amino ethyl acrylate, polydialkyl aminoalkyl (meth) acryl amides such as polydimethyl aminopropyl acrylamide and polydimethyl aminopropyl methacrylamide, polyacryl amide, polycationic acryl amide, polyamine sulfone, and polyallyl amine. Preferred among these is polyvinyl pyrolidone.

The combination of the dispersion stabilizer and the auxiliary stabilizer is not particularly limited, and examples thereof include a combination of colloidal silica and a condensation product; a combination of colloidal silica and a water-soluble nitrogen-containing compound; and a combination of magnesium hydroxide or calcium phosphate and an emulsifier. Preferred among these is a combination of colloidal silica and a condensation product. The condensation product is preferably a condensation product of diethanol amine and aliphatic dicarboxylic acid, and especially preferably a condensation product of diethanol amine and adipic acid or a combination product of diethanol amine and itaconic acid.

If colloidal silica is used as the dispersion stabilizer, the amount of the colloidal silica is not particularly limited, and is appropriately determined according to the particle size of the target thermally expandable microcapsule. The lower limit thereof is preferably 1 part by weight, and the upper limit is preferably 20 parts by weight, for 100 parts by weight of the total of the monomer components. The lower limit is more preferably 2 parts by weight, and the upper limit is more preferably 10 parts by weight.

If the condensation product or the water-soluble nitrogen-containing compound is used as the auxiliary stabilizer, the amount of the condensation product or the water-soluble nitrogen-containing compound is not particularly limited, and is appropriately determined according to the particle size of the target thermally expandable microcapsule. The lower limit thereof is preferably 0.05 parts by weight, and the upper limit is preferably 2 parts by weight, for 100 parts by weight of the total of the monomer components.

An inorganic salt such as sodium chloride and sodium sulfate may be added to the aqueous dispersion medium in addition to the dispersion stabilizer and the auxiliary stabilizer. An inorganic salt results in a thermally expandable microcapsule having more uniform particle shape.

The amount of the inorganic salt is not particularly limited, and the preferable upper limit thereof is 100 parts by weight for 100 parts by weight of the total of the monomer components.

The aqueous dispersion medium is prepared by adding the dispersion stabilizer and the auxiliary stabilizer to deionized water. The pH of the deionized water is appropriately determined according to the types of the dispersion stabilizer and the auxiliary stabilizer to be used. For example, in the case that silica such as colloidal silica is used as the dispersion stabilizer, the pH of the system is adjusted to 3 to 4 by optionally adding an acid such as hydrochloride, and polymerization is performed under acidic conditions in the step described below. In the case that magnesium oxide or calcium phosphate is used as the dispersion stabilizer, the system is alkalized, and polymerization is performed under alkaline conditions in the step described below.

In the production of the thermally expandable microcapsule, subsequently, the step of dispersing an oily mixture containing the monomer composition, the epoxy resin, and the volatile expansion agent in the aqueous dispersion medium is carried out.

In this step, the monomer composition, the epoxy resin, and the volatile agent may be separately added to the aqueous dispersion medium to prepare the oily mixture in the aqueous dispersion medium. Generally, however, the monomer composition, the epoxy resin, and the volatile agent are previously mixed to prepare the oily mixture, and the obtained oily mixture is added to the aqueous dispersion medium. In this case, the oily mixture and the aqueous dispersion medium may be previously prepared in two separate containers. Then, the oily mixture and aqueous dispersion medium are mixed with stirring in another container to prepare a dispersion of the oily mixture in the aqueous dispersion medium, and the obtained dispersion is then added to a polymerization vessel.

Here, a polymerization initiator is used in polymerization of monomers contained in the monomer composition. The polymerization initiator may be previously added to the oily mixture, or may be added after the aqueous dispersion medium and the oily mixture are mixed by stirring in a polymerization reaction vessel.

In the step of dispersing the oily mixture containing the monomer composition and the volatile expansion agent into the aqueous dispersion medium, the oily mixture is emulsified in the aqueous dispersion medium such that a predetermined particle size be achieved.

The method for emulsifying is not particularly limited. The oily mixture and the aqueous dispersion medium are emulsified by, for example, stirring using a honomixer (e.g. one produced by Tokusyu Kika Kogyo Co., Ltd.), or passing through a static dispersion apparatus such as a line mixer and an element-type static dispersion machine. Here, the aqueous dispersion medium and the oily mixture may be separately introduced to the static dispersion apparatus. Alternatively, a dispersion may be previously prepared by mixing and stirring the aqueous dispersion medium and the oily mixture, and then introduced to the apparatus.

In producing the thermally expandable microcapsule, subsequently, a step of copolymerizing the monomer composition is carried out. The method for copolymerization is not particularly limited. For example, the monomer composition is heated to be polymerized.

Thereby, a thermally expandable microcapsule that includes a shell containing a polymer obtained by polymerizing a monomer composition containing a nitrile-type monomer and an epoxy resin and a core agent that is a volatile expansion agent encapsulated by the shell can be obtained. The obtained thermally expandable microcapsule may be subsequently subjected to a step of dehydration, a step of drying, and the like.

The resin composition for foam molding of the present invention contains a curable compound containing two or more functional groups each selected from the group consisting of a carboxy group, a hydroxy group, an amino group, an amido group, and an acid anhydride group.

Examples of the curable compound include: carboxy group-containing compounds including aliphatic polycarboxylic acids such as succininc acid and adipic acid and aromatic polycarboxylic acids such as phthalic acid, terephthalic acid, and trimellitic acid; amino group-containing compounds or amido group-containing compounds such as diaminodiphenyl methane, diethylenetriamine, triethylenetetramine, diaminodiethyl toluene, diaminodiphenyl sulfone, isophorone diamine, dicyandiamide, and polyamide resins synthesized by dimers of linolenic acid and ethylenediamine; acid anhydride group-containing compounds such as trimellitic anhydride, pyromellitic anhydride, tetrahydrophthalic anhydride, methyl tetrahydrophthalic anhydride, methyl nadic anhydride, hexahydrophthalic anhydride, and methyl hexahydrophthalic anhydride; and hydroxy acids such as lactic acid, malic acid, and citric acid.

The curable compound is preferably added such that the number of the functional groups selected from the group consisting of a carboxy group, a hydroxy group, an amino group, an amido group, and an acid anhydride group be larger than the number of the epoxy groups in the epoxy resin. If the number of the functional groups is less than that of the epoxy group in the epoxy resin, thermosetting properties may not be exhibited during foaming by heating.

Here, the number of the epoxy groups may be calculated as (the amount of the epoxy resin/epoxy equivalent of the epoxy resin).

The resin composition for foam molding of the present invention contains a thermoplastic resin.

The thermoplastic resin is not particularly limited as long as it does not provide any adverse effect on the object of the present invention. Examples thereof include general thermoplastic resins such as polyvinyl chloride, polystyrene, polypropylene, polypropylene oxide, and polyethylene; and engineering plastics such as polybutylene terephthalate, nylon, polycarbonate, and polyethylene terephthalate. Thermoplastic elastomers such as ethylene-type, vinyl chloride-type, olefin-type, urethane-type, and ester-type thermoplastic elastomers, may also be used. Alternatively, these resins may be used in combination.

The amount of the thermally expandable microcapsule is 0.5 to 20 parts by weight, and preferably 1 to 10 parts by weight for 100 parts by weight of the thermoplastic resin. The thermoplastic resin may be used in combination with a chemical foaming agent such as sodium hydrocarbonate (sodium bicarbonate) and ADCA (azo-type).

The resin composition for foam molding of the present invention contains the thermally expandable microcapsule, a thermoplastic resin, and a curable compound. The resin composition for foam molding may be, for example, (1) one obtainable by mixing: a foamable masterbatch containing: the thermally expandable microcapsule, a thermoplastic resin as a matrix, and a curable compound; and a thermoplastic resin for molding or (2) one obtainable by mixing: a foamable masterbatch containing: the thermally expandable microcapsule, and a thermoplastic resin as matrix; a curable compound; and a thermoplastic resin for molding.

In the case of the resin composition for foam molding (1), coexistence of an epoxy resin and a curable compound in the formable masterbatch allows the epoxy resin to be cured securely during foaming by heating.

In the case of the resin composition for foam molding (2), the epoxy resin and the curable compound are separately introduced during molding. This enables use of epoxy resins and curable compounds having high reactivity and poor storage stability, which expands the range of material choice.

In the resin compositions for foam molding (1) and (2), the method for producing the foamable masterbatch is not particularly limited. For example, a masterbatch pellet is prepared by a method including steps of: previously kneading a matrix thermoplastic resin and optionally a curable compound and various additives using a same direction twin-screw extruder or the like; heating the kneaded product to a predetermined temperature; adding the thermally expandable microcapsule to the kneaded product; further kneading the obtained mixture; and cutting the resultant kneaded product with a pelletizer into a pellet having a desired size.

Also, a pellet-shaped masterbatch pellet may be produced by kneading the materials in a batch-type kneader and granulating the kneaded product with a granulator.

The kneader is not particularly limited as long as it allows kneading without breaking the thermally expandable microcapsule, and examples thereof include pressure kneaders and banbury mixers.

The application of the resin composition for foam molding of the present invention is not particularly limited, and can be molded by a method such as injection molding and extrusion molding to provide a foaming mold having heat barrier properties, heat insulating properties, sound insulating properties, sound absorbability, vibration damping properties, and reduced weight. The resin composition for foam molding of the present invention is appropriately used for foam molding methods including a step of heating at high temperatures, since it includes the thermally expandable microcapsule which is less likely to break or contract even at high temperatures, and can foam at high expansion ratio.

Advantageous Effects of Invention

According to the present invention, a resin composition for foam molding which can achieve high expansion ratio and can significantly improve tactile impression and vibration damping properties of the foaming mold to be obtained can be provided.

DESCRIPTION OF EMBODIMENTS

In the following, the present invention is described more specifically based on the following examples 1 to 4 and 11 to 15; examples 5 to 10, 16 and 17 being reference examples.

The examples are not limiting, but instead the invention is defined in the claims.

(Production of thermally expandable microcapsule)

A polymerization reaction vessel was charged with 250 parts by weight of water, 25 parts by weight of 20 wt% colloidal silica (a product of Asahi Denka Co. , Ltd.,), and 0.8 parts by weight of polyvinyl pyrolidone (a product of BASF Japan Ltd.,) as dispersion stabilizers, and 1.8 parts by weight of 1N hydrochloric acid to prepare an aqueous dispersion medium.

Subsequently, oily mixtures were prepared by mixing monomers, epoxy resins, curable compounds, polymerization initiators, and volatile expansion agents in amounts shown in Table 1. The oily mixtures were each added to the obtained dispersion medium and suspended to prepare dispersions. The dispersions were each stirred with a homogenizer. The stirred dispersions were each charged to a pressure polymerization vessel in which the air was substituted by nitrogen, and were allowed to react for six hours at 60°C and for five hours at 80°C, under pressure (0.5 MPa). Thereby, reaction products were obtained. The obtained reaction products were repeatedly filtered and washed with water and dried to provide thermally expandable microcapsules (A) to (M).

[Table 1]

| Oily mixture (parts by weight) | | | Microcapsules | | | | | | | | | | | | |
|---|---|---|---|---|---|---|---|---|---|---|---|---|---|---|---|---|
| | | | (A) | (B) | (C) | (D) | (E) | (F) | (G) | (H) | (I) | (J) | (K) | (L) | (M) |
| | Nitrile-type monomer | Acrylonitrile | 55 | 55 | 55 | 55 | 55 | 60 | 55 | 55 | 55 | 59.5 | 59.5 | 50 | 45 |
| | | Methacrylonitrile | 35 | 35 | 35 | 35 | 35 | 40 | 35 | 35 | 35 | 39.5 | 39.5 | 30 | 25 |
| | Epoxy resin | Glycidyl methacrylate (the number of the functional groups: 1) | 10 | - | - | - | - | - | - | - | - | - | - | - | - |
| | | Allyl glycidyl ether [Denacol EX-111] (the number of the functional groups :1) | - | 10 | - | - | - | - | - | - | - | - | - | - | - |
| | | Epikote 828US (the number of the functional groups :2) | - | - | - | - | - | - | - | 10 | 5 | - | 1 | - | - |
| | | jER-630 (the number of the functional groups :4) | - | - | - | - | - | - | 10 | - | 5 | 1 | - | - | - |
| | Curable compound | Methacrylic acid | - | - | 10 | - | - | - | - | - | - | - | - | 20 | 30 |
| | | Methacryl amide | - | - | - | 10 | - | - | - | - | - | - | - | - | - |
| | | Acryl amide | - | - | - | - | 10 | - | - | - | - | - | - | - | - |
| | Polymerization initiator | Azobisisobutyronitrile | 0.8 | 0.8 | 0.8 | 0.8 | 0.8 | 0.8 | 0.8 | 0.8 | 0.8 | 0.8 | 0.8 | 0.8 | 0.8 |
| | | 2,2'-azobis (2,4-dimethylvaleronitrile) | 0.6 | 0.6 | 0.6 | 0.6 | 0.6 | 0.6 | 0.6 | 0.6 | 0.6 | 0.6 | 0.6 | 0.6 | 0.6 |
| | Volatile expansion agent | Isopentane | 20 | 20 | 20 | 20 | 20 | 20 | 20 | 20 | 20 | 20 | 20 | 20 | 20 |
| | | Isooctane | 10 | 10 | 10 | 10 | 10 | 10 | 10 | 10 | 10 | 10 | 10 | 10 | 10 |

EP 2 660 283 B1

(Examples 1 to 17, Comparative Examples 1 to 5)

(Production of foamable thermoplastic resin masterbatch)

An amount of 100 parts by weight of a powdery and pellet-form low-density polyethylene (SUNFINE PAK00720, product of Asahi Kasei Chemicals Corporation) and 10 parts by weight of an epoxy resin or a curable compound shown in Table 1 were kneaded with a banbury mixer. After reaching about 100°C, 100 parts by weight of the thermally expandable microcapsule obtained above was added. Thereafter, the mixture was stirred for additional 30 seconds and extruded to be pelletized. Thereby, a masterbatch pellet was obtained.

(Production of foaming mold)

An amount of 4 parts by weight of the obtained masterbatch pellet, 100 parts by weight of TPE (RABALON MJ4300C, a product of Mitsubishi Chemical Corporation,), and 2 parts by weight of an epoxy resin or a curable compound shown in Table 1 were mixed. The obtained mixed pellet was introduced to a hopper of a screw injection molding machine equipped with an accumulator to be melted and kneaded. The kneaded product was subjected to extrusion molding, and thereby a plate-form foaming mold was obtained. The molding conditions were as follows: a cylinder temperature of 165°C; a die temperature of 165°C; an initial thickness of 1. 7 mm; and a core-back amount of 0.85 mm (set ratio: 1.5 times), 1.20 mm (set ratio: 1.7 times).

The epoxy resins used were as follows:

Glycidyl methacrylate (a product of Nacalai Tesque, Inc. , the number of the epoxy groups: 1),
Bisphenol A-type epoxy resin (Epikote 828 US: a product of Japan Epoxy Resin Co. , Ltd., the number of the epoxy groups: 2),
Allyl glycidyl ether (Denacol EX-111: a product of Nagase ChemteX Corporation, the number of the epoxy groups: 1), and
N,N'-bis(2,3-epoxypropyl)-4-(2,3-epoxypropoxy)aniline (jER-630: a product of Japan Epoxy Resin Co., Ltd., the number of the epoxy groups: 4).

(Evaluation)

The following evaluations were carried out on the heat curable resins used in examples and thermally expandable microcapsules obtained in examples and comparative examples. Tables 2 and 3 show the results.

(1) Expansion ratio

The specific gravity (D1) of the obtained foaming mold and the specific gravity (D0) of the base material were measured. The expansion ratio was calculated as D0/D1. Here, the specific gravity was measured using an electronic densimeter (ED-120T, a product of Mirage trading Co., Ltd).

The evaluation was carried out based on the following criteria.

"×": the expansion ratio was lower than 1.5 times
"○": the expansion ratio was not lower than 1.5 times but lower than 1.7 times
"○○": the expansion ratio was not lower than 1.7 times

(2) Tactile impression (Durometer hardness)

The durometer hardness of the obtained forming mold was measured according to JIS K 6253 using a type A durometer (Asker durometer Model.A, a product of Kobunshi Keiki Co., Ltd.).

The evaluation was carried out based on the following criteria.

"×": the durometer hardness was higher than 70%
"○": the durometer hardness was not higher than 70% but higher than 60%
"○○": the durometer hardness was not higher than 60%

(3) Static stiffness

A indenter (stainless steel, $\phi$ 15 mm × 10 mm, cylindrical shape) was put on the surface of the obtained foaming mold, and the height of the indenter was defined as 0. Subsequently, a load of 91.5 N was applied on the indenter for 60 seconds, and the displacement (S1) by the load was measured. Thereafter, a load of 320 N was applied on the indenter for 60 seconds, and the displacement (S2) by the load was measured. The static stiffness was calculated using the equation below.

$$\mathtt{Static\ stiffness\ =\ (320\ -\ 91.5)/(S2\ -\ S1)\ \ [N/mm]}$$

Here, a static material tester (EZ Graph, a product of Shimadzu Corp.) was used for the measurement.
The evaluation was carried out based on the following criteria.

"x": the static stiffness was higher than 300
"○": the static stiffness was not higher than 300 but higher than 250
"○○": The static stiffness was not higher than 250

(4) Dynamic stiffness and Ratio between static stiffness and dynamic stiffness

A indenter (stainless steel, $\phi$ 15 mm × 10 mm, cylindrical shape) was put on the surface of the obtained foaming mold, and the height of the indenter was defined as 0. The indenter was subjected to 1,000 cycles of loading under the set maximum load of 320 N and the set minimum load of 91.5 N. The following items were measured at 900th to 1000th cycles, and the average values thereof were calculated:

a load (FU) and a displacement (SU) at the maximum load; and
a load (FD) and a displacement (SD) at the minimum load.

The dynamic stiffness was calculated based on the following equation:

$$\mathtt{Dynamic\ stiffness\ =\ (FU\ -\ FD)/(SU\ -\ SD)\ \ [N/mm].}$$

Here, a tensilon universal testing machine (UTA-500, a product of A & D Company, Limited) was used for the measurement.
The ratio between the dynamic stiffness and the static stiffness was calculated using the following equation:

$$\mathtt{Ratio\ between\ the\ dynamic\ stiffness\ and\ the\ static}$$
$$\mathtt{stiffness\ =\ dynamic\ stiffness\ /static\ stiffness\ [times].}$$

The evaluation was carried out based on the following criteria.

"×": the ratio between the dynamic stiffness and the static stiffness was higher than 1.5 times
"○": the ratio between the dynamic stiffness and the static stiffness was not higher than 1.5 times

[Table 2]

| | | | | Examples | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Composition | Masterbatch | Microcapsule | Types | (A) | (B) | (A) | (B) | (C) | (D) | (E) | (C) | (D) | (E) | (G) | (H) |
| | | | The number of the functional groups in the epoxy resin | 1 | 1 | 1 | 1 | - | - | - | - | - | - | 4 | 2 |
| | | | The number of the functional groups in the curable compound | - | - | - | - | 1 | 1 | 1 | 1 | 1 | 1 | - | - |
| | | | The amount (parts by weight) | 100 | 100 | 100 | 100 | 100 | 100 | 100 | 100 | 100 | 100 | 100 | 100 |
| | | Resin as matrix | LDPE | 100 | 100 | 100 | 100 | 100 | 100 | 100 | 100 | 100 | 100 | 100 | 100 |
| | | Epoxy resin | Glycidyl methacrylate (1)* | - | - | - | - | - | - | - | - | - | - | - | - |
| | | | Bisphenol A type epoxy resin [Epikote 828 US] (2)* | - | - | - | - | 10 | 10 | 10 | - | - | - | - | - |
| | | Curable compound | Citric acid (3)* | 10 | 10 | - | - | - | - | - | - | - | - | 10 | 10 |
| | | | Stearic acid (1)* | - | - | - | - | - | - | - | - | - | - | - | - |
| | Resin composition for foam molding | Resin for molding | TPE | 100 | 100 | 100 | 100 | 100 | 100 | 100 | 100 | 100 | 100 | 100 | 100 |
| | | Masterbatch | - | 4 | 4 | 4 | 4 | 4 | 4 | 4 | 4 | 4 | 4 | 4 | 4 |
| | | Epoxy resin | Bisphenol A type epoxy resin [Epikote 828 US] (2)* | - | - | - | - | - | - | - | 2 | 2 | 2 | - | - |
| | | Curable compound | Citric acid (3)* | - | - | 2 | 2 | - | - | - | - | - | - | - | - |

EP 2 660 283 B1

(continued)

| | | | Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Evacuation | Foaming mold | Expansion ratio | OO | OO | OO | OO | OO | OO | OO | OO | OO | OO | OO | OO |
| | | Tactile impression (Durometer hardness) | OO | OO | O | O | OO | OO | OO | O | O | O | OO | OO |
| | | Static stiffness | OO | OO | O | O | OO | OO | OO | O | O | O | OO | OO |
| | | Ratio between dynamic stiffness and static stiffness | O | O | O | O | O | O | O | O | O | O | OO | O |
| * The numbers in parentheses refere to the number of the functional groups. | | | | | | | | | | | | | | |

[Table 3]

| | | | | | Examples | | | | | Comparative Examples | | | | |
|---|---|---|---|---|---|---|---|---|---|---|---|---|---|---|
| | | | | | 13 | 14 | 15 | 16 | 17 | 1 | 2 | 3 | 4 | 5 |
| Composition | Masterbatch | Microcapsule | | Types | (I) | (J) | (K) | (L) | (M) | (B) | (F) | (C) | (F) | (F) |
| | | | | The number of the functional groups in the epoxy resin | 4/2 | 4 | 2 | - | - | 1 | - | - | - | - |
| | | | | The number of the functional groups in the curable compound | - | - | - | 1 | 1 | - | - | 1 | - | - |
| | | | | Amount (parts by weight) | 100 | 100 | 100 | 100 | 100 | 100 | 100 | 100 | 100 | 100 |
| | | Resin as matrix | | LDPE | 100 | 100 | 100 | 100 | 100 | 100 | 100 | 100 | 100 | 100 |
| | | Epoxy resins | | Glycidyl methacrylate (1)* | - | - | - | - | - | - | - | 10 | - | - |
| | | | | Bisphenol A type epoxy resin [Epikote 828 US] (2)* | - | - | - | 10 | 10 | - | - | - | 10 | - |
| | | Curable compound | | Citric acid (3)* | 10 | 10 | 10 | - | - | - | 10 | - | - | - |
| | | | | Stearic acid (1)* | - | - | - | - | - | 10 | - | - | - | - |
| | Resin composition for foam molding | Resin for molding | | TPE | 100 | 100 | 100 | 100 | 100 | 100 | 100 | 100 | 100 | 100 |
| | | Masterbatch | | - | 4 | 4 | 4 | 4 | 4 | 4 | 4 | 4 | 4 | 4 |
| | | Epoxy resin | | Bisphenol A type epoxy resin [Epikote 828 US] (2)* | - | - | - | - | - | - | - | - | - | - |
| | | Curable compound | | Citric acid (3)* | - | - | - | - | - | - | - | - | - | - |
| Evaluation | Foaming mold | | | Expansion ratio | ○○ | ○○ | ○○ | ○○ | ○○ | ○ | ○ | ○ | ○ | X |
| | | | | Tactile impression (Durometer hardness) | ○○ | ○○ | ○○ | ○○ | ○○ | ○ | ○ | ○ | ○ | X |
| | | | | Static stiffness | ○○ | ○○ | ○○ | ○○ | ○○ | X | X | X | X | X |
| | | | | Ratio between dynamic stiffness and static stiffness | ○○ | ○○ | ○ | ○○ | ○ | X | X | X | X | X |

* The numbers in parentheses refer to the number of the functional groups.

EP 2 660 283 B1

INDUSTRIAL APPLICABILITY

The present invention provides a resin composition for foam molding which can achieve high expansion ratio and can significantly improve tactile impression and vibration damping properties of the foam molding to be obtained.

**Claims**

1.  A resin composition for foam molding comprising:

    - a thermally expandable microcapsule that includes a shell containing an epoxy resin and a core agent that is a volatile expansion agent encapsulated by the shell;
    - a thermoplastic resin; and
    - a curable compound having two or more functional groups each selected from the group consisting of a carboxy group, a hydroxy group, an amino group, an amido group, and an acid anhydride group in each molecule,

    wherein the epoxy resin is an epoxy resin for reacting with the curable compound to be cured during expansion of the thermally expandable microcapsule by heating.

2.  The resin composition for foam molding according to claim 1,
    wherein the curable compound is an aliphatic polycarboxylic acid, an aromatic polycarboxylic acid, an amino group-containing compound, an amido group-containing compound, an acid anhydride group-containing compound or an hydroxy acid.

3.  The resin composition for foam molding according to claim 1 or 2,
    wherein a monomer composition for a polymer contained in the shell contains a nitrile-type monomer.

4.  The resin composition for foam molding according to claim 1, 2 or 3 obtainable by mixing:

    - a foamable masterbatch containing:

        -- a thermally expandable microcapsule that includes a shell containing an epoxy resin and a core agent that is a volatile expansion agent encapsulated by the shell,
        -- a thermoplastic resin as a matrix, and
        -- a curable compound having two or more functional groups each selected from the group consisting of a carboxy group, a hydroxy group, an amino group, an amido group, and an acid anhydride group in each molecule; and

    - a thermoplastic resin for molding.

5.  The resin composition for foam molding according to claim 1, 2 or 3 obtainable by mixing:

    - a foamable masterbatch containing:

        -- a thermally expandable microcapsule that includes a shell containing an epoxy resin and a core agent that is a volatile expansion agent encapsulated by the shell, and
        -- a thermoplastic resin as a matrix;

    - a curable compound having two or more functional groups each selected from the group consisting of a carboxy group, a hydroxy group, an amino group, an amido group, and an acid anhydride group in each molecule; and
    - a thermoplastic resin for molding.

6.  A resin composition for foam molding according to claim 1, 2, 3, 4 or 5, comprising:

    an amount of the epoxy resin in the shell being 0.01 to 30% by weight for the total of the polymer forming the shell.

**Patentansprüche**

1.  Harzzusammensetzung zum Formschäumen, umfassend:

    - eine thermisch expandierbare Mikrokapsel, die eine Hülle umfasst, die ein Epoxyharz und einen Kernwirkstoff enthält, der ein durch die Hülle verkapselter flüchtiger Expansionswirkstoff ist,
    - ein thermoplastisches Harz und
    - eine härtbare Verbindung mit zwei oder mehr funktionellen Gruppen in jedem Molekül, die jeweils aus der aus einer Carboxygruppe, einer Hydroxygruppe, einer Aminogruppe, einer Amidogruppe und einer Säureanhydridgruppe bestehenden Gruppe ausgewählt ist/sind,

    wobei das Epoxyharz ein Epoxyharz zum Reagieren mit der härtbaren Verbindung ist, um während der Expansion der thermisch expandierbaren Mikrokapsel durch Erwärmen ausgehärtet zu werden.

2.  Harzzusammensetzung zum Formschäumen nach Anspruch 1,
    wobei die härtbare Verbindung eine aliphatische Polycarboxylsäure, eine aromatische Polycarboxylsäure, eine Aminogruppen-haltige Verbindung, eine Amidogruppen-haltige Verbindung, eine Säureanhydridgruppe-haltigen Verbindung oder eine Hydroxysäure ist.

3.  Harzzusammensetzung zum Formschäumen nach Anspruch 1 oder 2,
    wobei eine Monomerzusammensetzung für ein in der Hülle enthaltenes Polymer ein nitrilartiges Monomer enthält.

4.  Harzzusammensetzung zum Formschäumen nach Anspruch 1, 2 oder 3, erhältlich durch Mischen:

    - eines schäumbaren Masterbatches, der enthält:

        -- eine thermisch expandierbare Mikrokapsel, die eine Hülle umfasst, die ein Epoxyharz und einen Kernwirkstoff enthält, der ein durch die Hülle verkapselter flüchtiger Expansionswirkstoff ist,
        -- ein thermoplastisches Harz als eine Matrix und
        -- eine härtbare Verbindung mit zwei oder mehr funktionellen Gruppen in jedem Molekül, die jeweils aus der aus einer Carboxygruppe, einer Hydroxygruppe, einer Aminogruppe, einer Amidogruppe und einer Säureanhydridgruppe bestehenden Gruppe ausgewählt ist/sind, und

    - eines thermoplastischen Harzes zum Formen.

5.  Harzzusammensetzung zum Formschäumen nach Anspruch 1, 2 oder 3, erhältlich durch Mischen:

    - eines schäumbaren Masterbatches, der enthält:

        -- eine thermisch expandierbare Mikrokapsel, die eine Hülle umfasst, die ein Epoxyharz und einen Kernwirkstoff enthält, der ein durch die Hülle verkapselter flüchtiger Expansionswirkstoff ist,
        -- ein thermoplastisches Harz als eine Matrix,

    - einer härtbaren Verbindung mit zwei oder mehr funktionellen Gruppen in jedem Molekül, die aus der aus einer Carboxygruppe, einer Hydroxygruppe, einer Aminogruppe, einer Amidogruppe und einer Säureanhydridgruppe bestehenden Gruppe ausgewählt ist/sind, und
    - eines thermoplastischen Harzes zum Formen.

6.  Harzzusammensetzung zum Formschäumen nach Anspruch 1, 2, 3, 4, oder 5,
    wobei eine Menge des Epoxyharzes in der Hülle 0,01 bis 30 Gewichts-% in Bezug auf die Gesamtmenge des die Hülle bildenden Polymers beträgt.

**Revendications**

1.  Composition de résine pour le moulage de mousse comprenant :

    - une microcapsule thermiquement expansible qui comprend une enveloppe contenant une résine époxy et un agent de coeur qui est un agent d'expansion volatil encapsulé par l'enveloppe ;
- une résine thermoplastique ; et
- un composé durcissable ayant deux groupes fonctionnels ou plus, chacun choisi dans le groupe constitué par un groupe carboxy, un groupe hydroxy, un groupe amino, un groupe amido et un groupe anhydride d'acide dans chaque molécule,

dans laquelle la résine époxy est une résine époxy à faire réagir avec le composé durcissable à durcir lors de l'expansion de la microcapsule thermiquement expansible par chauffage.

2. Composition de résine pour le moulage de mousse selon la revendication 1,
dans laquelle le composé durcissable est un acide polycarboxylique aliphatique, un acide polycarboxylique aromatique, un composé contenant un groupe amino, un composé contenant un groupe amido, un composé contenant un groupe anhydride d'acide ou un hydroxyacide.

3. Composition de résine pour le moulage de mousse selon la revendication 1 ou 2,
dans laquelle une composition de monomères pour un polymère contenu dans l'enveloppe contient un monomère de type nitrile.

4. Composition de résine pour le moulage de mousse selon la revendication 1, 2 ou 3, pouvant être obtenue en mélangeant :

- un mélange maître moussant contenant :

-- une microcapsule thermiquement expansible qui comprend une enveloppe contenant une résine époxy et un agent de coeur qui est un agent d'expansion volatil encapsulé par l'enveloppe,
-- une résine thermoplastique en tant que matrice, et
-- un composé durcissable ayant deux groupes fonctionnels ou plus, chacun choisi dans le groupe constitué par un groupe carboxy, un groupe hydroxy, un groupe amino, un groupe amido et un groupe anhydride d'acide dans chaque molécule ; et

- une résine thermoplastique pour le moulage.

5. Composition de résine pour le moulage de mousse selon la revendication 1, 2 ou 3, pouvant être obtenue en mélangeant :

- un mélange maître moussant contenant :

-- une microcapsule thermiquement expansible qui comprend une enveloppe contenant une résine époxy et un agent de coeur qui est un agent d'expansion volatil encapsulé par l'enveloppe, et
-- une résine thermoplastique en tant que matrice ;

- un composé durcissable ayant deux groupes fonctionnels ou plus chacun choisi dans le groupe constitué par un groupe carboxy, un groupe hydroxy, un groupe amino, un groupe amido et un groupe anhydride d'acide dans chaque molécule ; et
- une résine thermoplastique pour le moulage.

6. Composition de résine pour le moulage de mousse selon la revendication 1, 2, 3, 4 ou 5, comprenant :

une quantité de la résine époxy dans l'enveloppe qui est de 0,01 à 30 % en poids du total du polymère formant l'enveloppe.

**EP 2 660 283 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO4226524 B
- WO 9943758 A
- JP 2005029607 A